Europäisches Patentamt

**European Patent Office**

**Office européen des brevets**

(11) Publication number: **0 070 672**
A1

# EUROPEAN PATENT APPLICATION

(21) Application number: **82303662.9**

(22) Date of filing: **13.07.82**

(51) Int. Cl.³: **A 01 D 53/06,** A 01 D 35/22

(30) Priority: **22.07.81 GB 8122623**

(43) Date of publication of application: **26.01.83**
**Bulletin 83/4**

(84) Designated Contracting States: **BE DE FR GB LU NL**

(71) Applicant: **Birmid Qualcast (Home & Garden Equipment)
Limited, Coleridge Street Sunnyhill, Derby DE3 7JT (GB)**

(72) Inventor: **Davies, Alan, Cannock Road High Town,
Hednesford Staffordshire WS11 2TD (GB)**

(74) Representative: **Sanders, Peter Colin Christopher et al,
BROOKES & MARTIN High Holborn House 52/54 High
Holborn, London WC1V 6SE (GB)**

(54) **Grass boxes for lawnmowers.**

(57) A grass collection box for attachment to a lawn mower
has a pivotally mounted tray 12 normally resting on the floor 16
of the box 11. The tray can be pivoted into an upright position
so that grass cuttings deposited on the tray are transferred to
a more rearward and/or elevated position within the box 11 to
leave space in the bottom front portion of the box for fresh cut-
tings.

- 1 -

TITLE:   GRASS BOXES FOR LAWNMOWERS

A known problem with cylinder lawnmowers having rear
grass collection is that the grass cuttings tend to
build up in the front of the grass collection box.
This can eventually lead to clogging of the mower exit
chute unless mowing is interrupted and the grass
cuttings are manually redistributed within the box.
Moreover, even after manual redistribution, not all the
available space within the collection box is utilised.

In accordance with the present invention a grass
collection box for a lawnmower has an open front for
receiving grass cuttings ejected from the mower, and
further comprises a transfer device movable within the
box between a first position and a second position,
the arrangement being such that grass cuttings deposited
in a first portion of the box when the device is in its
first position are transferred to a second portion of
the box when the device is moved to its second position
whereby fresh cuttings can be deposited in the first
portion of the box.

In a preferred embodiment of the invention the first
portion of the box is a front bottom portion and further
means are provided for releasably retaining the transfer
device in its second position whereby the transferred
cuttings are retained in a more rearward and/or elevated
portion of the box while fresh cuttings are delivered
into the front bottom portion of the box.  This increases
the amount of grass which can be collected in a given
size box.

The transfer device is preferably arranged so that
grass cuttings are compacted against a rear portion
of the box in response to movement of the device from its first position to its second position.

In the accompanying drawings, by way of example only:

Fig. 1 is a perspective view of a rear collection lawnmower fitted with a grass collection box embodying the invention, and,

Fig. 2 is a side elevation sketch of a grass box embodying the invention.

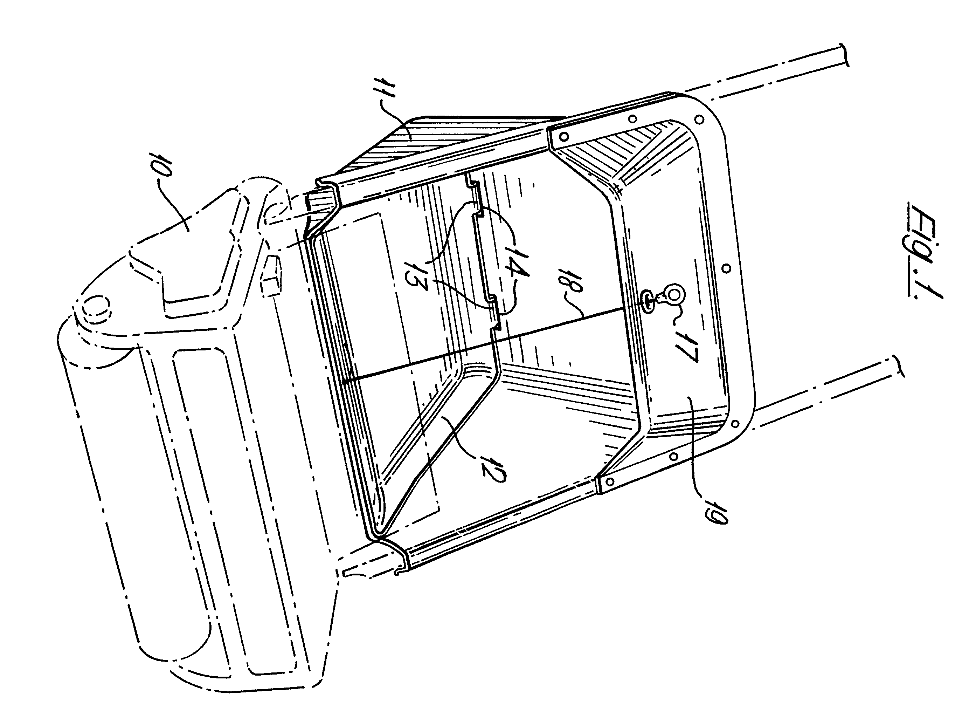

Referring to these drawings, Fig. 1 shows a rear collection lawnmower 10 of known design (illustrated in chain-dot outline) fitted with a grass collection box 11.

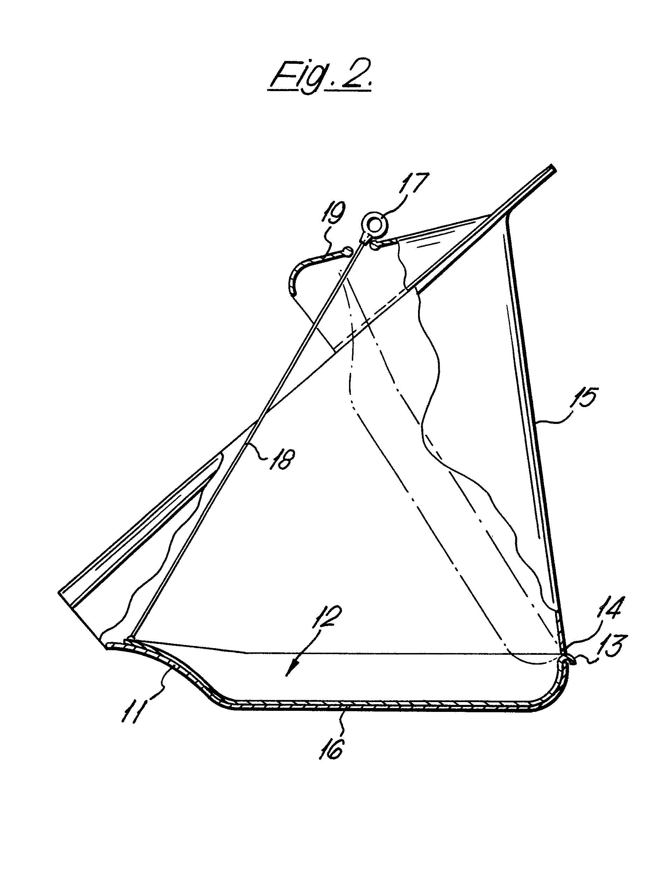

As shown more clearly in Fig. 2, the grass collection box 11 is provided with a tray 12 which can pivot from the position shown in full outline to the position shown in chain-dot outline.

The rear of the tray 12 includes a pair of pivot hooks 13 which engage respective slots 14 in the rear wall 15 of the collection box. The tray 12 normally rests on the floor 16 of the collection box, but it can be pivoted into its upright position by means of a pull-ring 17 and a draw cord 18, the draw cord passing through a hole in the top wall 19 of the collection box and being secured to the front edge of the tray 12. The tray can be releasably retained in its upright position by, for example, cleating the draw cord.

In use, grass cuttings delivered into the open front of the grass box 11 are initially deposited on the tray 12. When sufficient cuttings have accumulated on the tray, the pull-ring 17 is grasped and the tray is pivoted into its upright position. The accumulated cuttings are thus transferred to a more rearward and/or elevated portion of the box 11, and are compacted against the rear wall 15 of the box. In particular, some cuttings will be transferred to the upper rear portion of the box which is normally wasted space. The tray can then be released but is preferably retained in its upright position by cleating the draw cord 18. The remaining volume of the box beneath the tray is now completely clear so that fresh cuttings can be deposited on the floor 16 of the box and mowing can continue uninterrupted until this remaining volume has been filled. After releasing the draw cord, the box can then be emptied in the usual manner by detaching it from the lawnmower handles and overturning it.

CLAIMS

1. A grass collection box for attachment to a lawn mower, the box comprising an open front for receiving grass cuttings ejected from the mower, and a transfer device movable within the box between a first position and a second position, the arrangement being such that grass cuttings deposited in a first portion of the box when the device is in its first position are transferred to a second portion of the box when the device is moved to its second position whereby fresh cuttings can be deposited in the first portion of the box.

2. A grass collection box according to claim 1 further comprising means for releasably retaining the transfer device in its second position.

3. A grass collection box according to claim 1 or claim 2 in which the first portion is a front bottom portion and the second portion is a more rearward and/or elevated portion.

4. A grass collection box according to claim 3 in which the device is pivotally mounted at a bottom rear portion of the box, and in which the transferred cuttings are compacted against the rear portion of the box when the device is pivoted from its first position to its second position.

5. A grass collection box according to any one of
the preceding claims in which the first position
is a generally flat position overlying the bottom
of the box, and the second position is an inclined
position.

6. A grass collection box according to any one of
the preceding claims in which the first position is
disposed in the path of the grass cuttings ejected
from the mower, and the second position is disposed
out of the said path.

7. A grass collection box for attachment to a lawnmower, the box comprising an open front for receiving
grass cuttings ejected from the mower, and a transfer
device movable within the box from a first position
disposed in the path of the ejected grass cuttings
to a second position disposed out of the said path
whereby, in use, accumulated grass cuttings are
transferred out of the path of fresh grass cuttings
by moving the device from its first position to its
second position.

*Fig.1.*

0070672

## Fig.2.

# EUROPEAN SEARCH REPORT

**European Patent Office**

Application number

**0070672**

EP 82303662.9

## DOCUMENTS CONSIDERED TO BE RELEVANT

| Category | Citation of document with indication, where appropriate, of relevant passages | Relevant to claim |
|---|---|---|
| X | <u>GB - A - 262 866</u> (THOMAS MORGAN)  + Totality + | 1-7 |

**CLASSIFICATION OF THE APPLICATION (Int. Cl. ³)**

A 01 D 53/06
A 01 D 35/22

**TECHNICAL FIELDS SEARCHED (Int.Cl. ³)**

A 01 D 35/00
A 01 D 53/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| X | The present search report has been drawn up for all claims | |

| Place of search | Date of completion of the search | Examiner |
|---|---|---|
| VIENNA | 18-10-1982 | RUMLER |

EPO Form 1503.1  06.78